(19) Europäisches Patentamt / European Patent Office / Office européen des brevets

(11) **EP 3 229 038 B1**

(12) **EUROPEAN PATENT SPECIFICATION**

(45) Date of publication and mention
of the grant of the patent:
**27.05.2020  Bulletin 2020/22**

(21) Application number: **15865192.7**

(22) Date of filing: **08.09.2015**

(51) Int Cl.:
***G01S 13/90*** (2006.01)

(86) International application number:
**PCT/CN2015/089141**

(87) International publication number:
**WO 2016/086699 (09.06.2016 Gazette 2016/23)**

(54) **WAVELET DOMAIN INSAR INTERFEROMETRIC PHASE FILTERING METHOD IN COMBINATION WITH LOCAL FREQUENCY ESTIMATION**

INTERFEROMETRISCHES INSAR-PHASENFILTERVERFAHREN EINER WAVELET-DOMÄNE IN KOMBINATION MIT LOKALER FREQUENZSCHÄTZUNG

PROCÉDÉ DE FILTRAGE DE PHASE INTERFÉROMÉTRIQUE INSAR DE DOMAINE D'ONDELETTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.12.2014  CN 201410717610**

(43) Date of publication of application:
**11.10.2017  Bulletin 2017/41**

(73) Proprietor: **Institute of Electronics, Chinese Academy of Sciences**
**Beijing 100080 (CN)**

(72) Inventors:
- **DING, Chibiao**
  **Beijing 100080 (CN)**
- **LI, Fangfang**
  **Beijing 100080 (CN)**
- **LEI, Bin**
  **Beijing 100080 (CN)**
- **LIN, Xue**
  **Beijing 100080 (CN)**
- **HU, Donghui**
  **Beijing 100080 (CN)**
- **QIU, Xiaolan**
  **Beijing 100080 (CN)**

(74) Representative: **Witte, Weller & Partner**
**Patentanwälte mbB**
**Postfach 10 54 62**
**70047 Stuttgart (DE)**

(56) References cited:
**CN-A- 103 208 101     CN-A- 103 226 194**
**CN-A- 103 823 219     CN-A- 104 459 633**
**US-A- 6 097 328**

- **YONG BIAN ET AL: "Interferometric SAR Phase Filtering in the Wavelet Domain Using Simultaneous Detection and Estimation", IEEE TRANSACTIONS ON GEOSCIENCE AND REMOTE SENSING, vol. 49, no. 4, 1 April 2011 (2011-04-01), pages 1396-1416, XP011351009, IEEE SERVICE CENTER, PISCATAWAY, NJ, US ISSN: 0196-2892, DOI: 10.1109/TGRS.2010.2076286**
- **CHANG LIANG ET AL: "InSAR interferogram detail-compensating filtering method based on the stationary wavelet transform", URBAN REMOTE SENSING EVENT, 2009 JOINT, IEEE,, 20 May 2009 (2009-05-20), pages 1-5, XP031481452, PISCATAWAY, NJ, USA ISBN: 978-1-4244-3460-2**
- **CARLOS LÓPEZ-MARTÍNEZ ET AL: "Modeling and Reduction of SAR Interferometric Phase Noise in the Wavelet Domain", IEEE TRANSACTIONS ON GEOSCIENCE AND REMOTE SENSING,, vol. 40, no. 12, 1 December 2002 (2002-12-01), pages 2553-2566, XP011073287, PISCATAWAY, NJ, US ISSN: 0196-2892**
- **BEN ABDALLAH WAJIH ET AL: "A modification to the ASM filter for improving SAR interferograms", 21ST EUROPEAN SIGNAL PROCESSING CONFERENCE (EUSIPCO 2013), EURASIP, 9 September 2013 (2013-09-09), pages 1-5, XP032593745, [retrieved on 2014-05-07]**

- RIADH ABDELFATTAH ET AL: "SAR interferogram filtering in the wavelet domain using a coherence map mask", 15TH IEEE INTERNATIONAL CONFERENCE ON IMAGE PROCESSING : ICIP 2008 ; SAN DIEGO, CALIFORNIA, USA, 12 - 15 OCTOBER 2008, IEEE,, 12 October 2008 (2008-10-12), pages 1888-1891, XP031374395, PISCATAWAY, NJ, USA ISBN: 978-1-4244-1765-0

- YUE, YINHUAN ET AL.: 'SAR Interferogran Filtering Based on Stationary Wavelet Decomposition' HIGH TECHNOLOGY LETTERS vol. 1, no. 5, 31 May 2002, ISSN 1002-0470 pages 5 - 9

## Description

## TECHNICAL FIELD

The present disclosure relates to the field of electronic information and radar technologies, and in particular, to a method for InSAR interferometric phase filtering in a wavelet domain in conjunction with local frequency estimation.

## BACKGROUND

Interferometric Synthetic Aperture Radar (InSAR) utilizes interferometric phase information of two channels of synthetic aperture radar (SAR) to extract elevation information or deformation information of the earth's surface, and expands measurements of SAR to 3D space. InSAR can operate all day and all weather with high precision. Therefore, InSAR can be widely applied in many fields, such as terrain mapping, glacier research, marine mapping, and ground subsidence monitoring, and so on.

Accuracy and reliability of interferometric measurements depend on the quality of an interferometric phase image to a great extent. In a practical system, however, there are inevitable phase noises in an interferometric phase image, due to influences of a variety of decorrelation factors, such as thermal noise decorrelation, time decorrelation, baseline decorrelation, registration error and so on. A low quality of interferometric phase will affect accuracy of subsequent interferometric phase unwrapping and elevation inversion. Therefore, the interferometric phase has to be filtered before phase unwrapping, in order to obtain an interferometric phase image with high quality.

Currently, methods for interferometric phase filtering can be divided into two categories: spatial domain filtering and transform domain filtering. Pivoting mean filtering or median filtering is a kind of basic spatial domain filtering method (see Reference 1). It is easy to implement the method, but not easy to determine the size of its filtering window. When fringes are dense, phase details are easily broken, and the resolution is reduced. The transform domain filtering method is more widely used in practice, such as Goldstein filtering (see Reference 2). However, this method is greatly influenced by its block size and filtering parameters. The performance is poor in the case of low signal-to-noise ratio (SNR). Wavelet transform can also be applied to the interferometric phase filtering due to its good time-frequency analysis characteristics and multi-resolution characteristics (see Reference 3). This method achieves the filtering by increasing signal components in wavelet coefficients, which may preserve detail information of the interferometric fringes well, and may improve the SNR of images to a certain extent. However, since noise information is not suppressed effectively, the noise removal effect is poor. Therefore, in order to meet requirements of InSAR applications on accuracy of interferometric phases, it is necessary to further develop a method for interferometric phase filtering in the transform domain which can effectively remove noises and retain phase details.

References:

[1] R. Lanari. Generation of digital elevation models by using SIR-C/X-SAR multifrequency two-pass interferometry: The Etna case study. IEEE Transactions on Geoscience and Remote Sensing, 1996, 34(5): 1097-1114.

[2] R. M. Goldstein, C. L. Werner. Radar Interferogram filtering for Geophysical Application. Geophysical Research Letters. 1998, 25(21): 4035-4038.

[3] Lopez-Martinez C, Fabregas X. Modeling and reduction of SAR interferometric phase noise in the wavelet domain [J]. IEEE Trans. on Geoscience and Remote Sensing, 2002, 40(12): 2553-2566

[4] Y. Bian and B. Mercer: "Interferometic SAR Phase filtering in the wavelet Domain using Simultaneous Detection and Estimation", IEEE TRANSACTIONS ON GEOSCIENCE AND REMOTE SENSING, vol. 49, no. 4, 1 April 2011 (2011-04-01), pages 1396-1416, XP011351009, IEEE SERVICE CENTER, PISCATAWAY, NJ, US ISSN: 0196-2892, DOI: 10.1109/TGRS.2010.2076286 proposes two interferometic SAR (InSAR) phase-filtering methods. These methods are performed in the wavelet domain and employ the simultaneous detection and estimation technique. In the wavelet domain, closed-form estimator and detector equations are derived, based upon a quadratic cost function, to minimize the combined risk of detection and estimation and, thus, the least square errors. Both methods occur within the wavelet domain; however, the first method employs the wavelet packet, while the second method is performed in the undecimated wavelet domain. A major characteristic of InSAR phase data is that the noise level is partially variable, and the proposed methods have a particularly good comparative performance in these situations. Tests performed using simulated phase data showed that the proposed methods have lower root-mean-square error and less noisy fringes in the filtering results than those of three existing "state-of-the-art" wavelet-domain phase-filtering methods. Tests using real InSAR data also demonstrated the superiority of the proposed methods in terms of visual and quantitative evaluation.

[5] C. Liand and H. Xiufeng: "InSAR interferogram detail-compensating filtering method based on the stationary wavelet transform", URBAN REMOTE SENSING EVENT, 2009 JOINT, IEEE, 20 May 2009 (2009-05-20), pages 1-5, XP031481452, PISCATAWAY, NJ, USA, ISBN: 978-1-4244-3460-2 explains that speckle is an inherent characteristic of InSAR (Interferometric Synthetic Aperture Radar) interferogram, which affects the accuracy of prediction and evaluation of urban Geology and Geohazards, so it is necessary to carry out interferogram filtering to suppress the effect of speckle. However, there is a contradiction between speckle reduction and keeping the details of the interferogram in current methods of interferogram filtering. Using the difference idea and the character of the wavelet transform, a InSAR interferogram detail-compensating filter method is proposed based on the stationary wavelet transform. The new method can suppress the speckle effectively, but also it can maintain details of interferogram well by compensating the details, and it reduces the number of residual points greatly.

[6] W. Ben Abdallah and R. Abdelfattah: " A modification to the ASM filter for improving SAR interferograms", 21ST EUROPEAN SIGNAL PROCESSING CONFERENCE (EUSIPCO 2013), EURASIP, 9 September 2013 (2013-09-09), pages 1 - 5, XP032593745, focusses on the step of interferogram denoising using the Adaptive Switching Median Filter (ASMF) in the wavelet domain. Thus, it proposes to filter the coefficients of the relative Discrete Packet Wavelet Transform (DPWT). The main contribution of this paper concerns firstly, the methodology for computing the mask of noise corresponding to the InSAR phase. Secondly, the size of the median filter computed considering the noise mask within a given neighborhood and taking into account the corresponding InSAR coherence values. This scheme is tested on simulated noisy interferograms as well as on a given pairs of single look complex (SLC) data from Envisat satellite. Validation was made by computing the Digital Elevation Model after unwrapping the filtered interferogram.

[7] R. Abdelfattah and A Bouzid: "SAR interferogram filtering in the wavelet domain using a coherence map mask", 15TH IEEE INTERNATIONAL CONFERENCE ON IMAGE PROCESSING: ICIP 2008; SAN DIEGO, CALIFORNIA, USA, 12 - 15 OCTOBER 2008, IEEE,, 12 October 2008 (2008-10-12), pages 1888-1891, XP031374395, PISCATAWAY, NJ, USA, ISBN: 978-1-4244-1765-0 proposes a modified filtering algorithm to the Lopez and Fabregas noise reduction algorithm for the interferometric phase noise in SAR interferometry using a multiresolution approach. The contribution to the existing algorithm consists on the exploitation of the InSAR coherence map in order to generate a more adapted mask for each decomposition level. The developed algorithm is then tested and validated on simulated and real (ERS, SLC) data.

## SUMMARY

I. Technical Problem To Be Solved

The present disclosure provides a method for InSAR interferometric phase filtering in a wavelet domain in conjunction with local frequency estimation, in order to overcome disadvantages of the conventional methods for interferometric phase filtering in the wavelet domain that cannot remove noises and preserve details at the same time, thereby improving the accuracy of the interferometric phase.

II. Technical Solutions

According to an aspect of the present disclosure, a method for interferometric phase filtering of Interferometric Synthetic Aperture Radar (InSAR) data in a wavelet domain in conjunction with local frequency estimation is provided. The method for InSAR interferometric phase filtering in the wavelet domain comprises: Step A: transforming an interferometric phase $\phi$ of the InSAR into $e^{j\phi}$ in a complex field, and determining a real part and an imaginary part of the interferometric phase $e^{j\phi}$ in the complex field, respectively; Step B: performing a local frequency estimation on the interferometric phase $\phi$ to determine a frequency range in which the interferometric phase is located; Step C: performing wavelet decompositions on the real part and the imaginary part of the interferometric phase in the complex field with a scale of s, respectively, to determine frequency ranges of wavelet coefficients $c_{m,n}^{i}$ for different sub-bands, wherein $m$ and $n$ are positions of the wavelet coefficients, and $i$ is the scale of the decomposition within a range of $1$ to $s$; Step D: determining, for the real part and the imaginary part of the interferometric phase in the complex field, respectively, sub-bands in which useful information and noise are located, respectively, according to the frequency range in which the interferometric phase is located and the frequency ranges of the wavelet coefficients for different sub-bands; Step E: performing, for the real part and the imaginary part of the interferometric phase in the complex field, respectively, a general threshold shrinkage processing on the wavelet coefficients for the sub-bands in which the noise is located; Step F: performing, for the real part and the imaginary part of the interferometric phase in the complex field, respectively, a neighborhood threshold shrinkage processing, respectively, on the wavelet coefficients for the sub-bands in which the useful information is located; Step G: performing, for the real part and the imaginary part of the interferometric phase in

4

the complex field, respectively, wavelet reconstruction on the wavelet coefficients for the sub-bands in which the noise is located after the general threshold shrinkage processing and the wavelet coefficients for the sub-bands in which the useful information is located after the neighborhood threshold shrinkage processing collectively, to obtain a real part and an imaginary part of a filtered interferometric phase in the complex field; and Step H: obtaining a filtered InSAR interferometric phase from the real part and the imaginary part of the filtered interferometric phase in the complex field.

III. Advantageous Effects

With the local frequency estimation, the present disclosure enables the distinction of the useful information sub-band from the noise sub-band in the wavelet coefficients of the complex interferometric phase. By using the characteristics of the general threshold shrinkage method and the neighborhood threshold shrinkage method, i.e. the good noise removal performance and the strong detail preserving capability, respectively, the neighborhood threshold shrinkage is performed on the wavelet coefficients of the sub-bands in which the useful information is located, while the general threshold shrinkage is performed on the wavelet coefficients of other sub-bands. In this way, the noise may be filtered out as much as possible, while the detail information of the interferometric fringes may be kept from being destroyed, thereby achieving a highly accurate interferometric phase filtering and providing foundations for the highly accurate interferometric measurement.

## BRIEF DESCRIPTION OF THE DRAWINGS

Fig. 1 is a flowchart of a method for InSAR interferometric phase filtering in a wavelet domain in conjunction with local frequency estimation according to an embodiment of the present disclosure;

Fig. 2 is a measured space-borne InSAR interferometric phase image of the Italian Etna volcano; and

Figs. 3A to 3D are interferometric phase images which are filtered by pivoting mean filtering, Goldstein filtering, wavelet filtering proposed by Lopez-Martinez C, and the method according to the present embodiment, respectively.

## DETAILED DESCRIPTION

The drawings described herein are provided to further understand the present disclosure, and constitute a part of the present disclosure. The exemplary embodiments of the present disclosure and the description thereof are intended to explain the present disclosure, and are not to be construed as inappropriate limitations on the present disclosure.

In order to clarify the objects, aspects, and advantages of the present disclosure, the present disclosure will be further described in detail below in conjunction with specific embodiments with reference to the accompanying drawings. It should be noted that same reference numerals are used for similar or same elements in the drawings or the descriptions. Implementations which are not shown or described in the drawings can be derived by the skilled in the art from the present disclosure. In addition, although the present disclosure may provide examples of parameters that contain specific values, it should be understood that the parameters are not necessary to be strictly equal to the corresponding values, but may be approximate to the corresponding value within an acceptable error tolerance or design constraint.

According to the embodiment of the present disclosure, after the interferometric phase which is obtained by pre-processing is transformed into the wavelet domain, the sub-bands of the wavelet coefficients which contain the useful information are determined by the local frequency estimation, and by using a neighborhood threshold, shrinkage processing is performed on the wavelet coefficients of the sub-bands in which the useful information is located, while by using a general threshold, shrinkage processing is performed on the wavelet coefficients of other sub-bands. In this way, the noise may be removed as much as possible without loss of the detail information of the interferometric fringes, thereby providing an effective method for InSAR interferometric phase filtering.

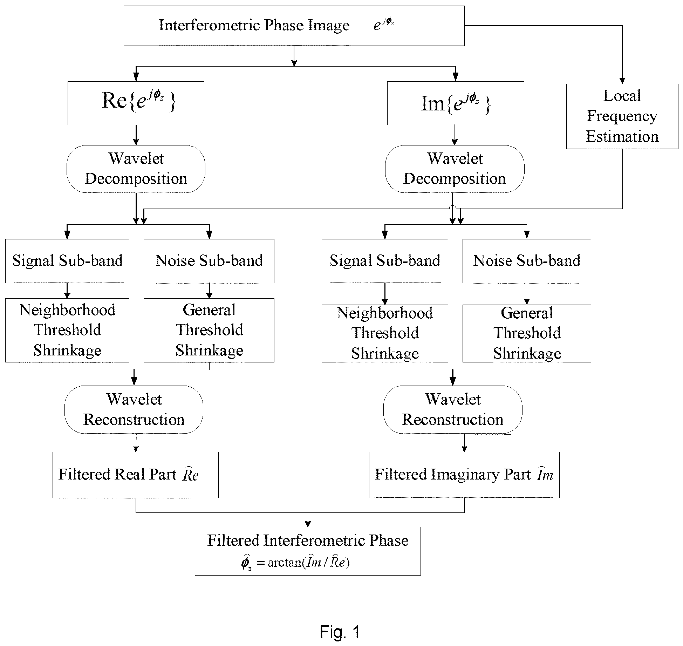

According to an aspect of the present disclosure, a method for InSAR interferometric phase filtering in a wavelet domain in conjunction with local frequency estimation is provided. Fig. 1 is a flowchart of the method for InSAR interferometric phase filtering in a wavelet domain in conjunction with local frequency estimation according to an embodiment of the present disclosure. As shown in Fig. 1, the method for InSAR interferometric phase filtering in a wavelet domain in conjunction with local frequency estimation according to the present embodiment comprises:

Step A: an InSAR interferometric phase $\phi$ which is obtained by pre-processing is transformed into $e^{j\phi} = \cos\phi + j\sin\phi$ in the complex field, and a real part $\mathrm{Re}\{e^{j\phi}\} = \cos\phi$ and an imaginary part $\mathrm{Im}\{e^{j\phi}\} = \sin\phi$ of the interferometric phase

$e^{j\phi}$ are obtained in the complex field, respectively.

The pre-processing here comprises imaging processing, registration processing, complex data conjugate multiplication on dual-channel InSAR data, etc., which are well known in the art and description thereof will be omitted here for simplicity.

Step B: a local frequency estimation is performed on the interferometric phase $e^{j\phi}$ in the complex field to obtain a frequency range in which the interferometric phase is located.

In particular, Step B comprises:

Sub-step B1: a local frequency estimation is performed for each pixel of the interferometric phase $\phi$ to obtain an interferometric phase frequency $\widehat{f}_a$ in the azimuth direction and an interferometric phase frequency $\widehat{f}_r$ in the range direction by:

Sub-sub-step B1a: an estimation window having a size of $(2M+1)\times(2N+1)$ and centered at the pixel is determined, wherein a phase model of the estimation window may be expressed by

$$\varphi(m+k, n+l) = 2\pi l \cdot f_r + 2\pi k \cdot f_a + \varphi(m,n) \, , \qquad (1)$$

where $\varphi(m,n)$ is the phase of the central pixel of the estimation window, $k$ and $l$ are offsets of the pixels in the window with respect to the center of the window, and $f_a, f_r$ are the interferometric phase frequencies of the window in the azimuth direction and in the range direction, respectively.

In this embodiment, M and N may have values of 4 and 4, respectively, but the present disclosure is not limited thereto. In other embodiments of the present disclosure, the values of M and N may satisfy $2 \leq M \leq 10$, $2 \leq N \leq 10$.

Sub-sub-step B1b: the interferometric phase frequency $\widehat{f}_a$ in the azimuth direction and the interferometric phase frequency $\widehat{f}_r$ in the range direction is estimated for the pixel by maximizing a cost function of the phase model of corresponding estimation window:

$$\widehat{f}_r = \arg\max_{f_r}\{|\sum_{k=-M}^{M}\sum_{l=-N}^{N} \exp(j\varphi(m+k, n+l))\exp(-j2\pi f_r l)|\}$$

$$\widehat{f}_a = \arg\max_{f_a}\{|\sum_{k=-M}^{M}\sum_{l=-N}^{N} \exp(j\varphi(m+k, n+l))\exp(-j2\pi f_a k)|\} \qquad (2)$$

Sub-step B2: a maximum $\widehat{f}_{a\max}$ and a minimum $\widehat{f}_{a\min}$ are determined from the estimated interferometric phase frequency $\widehat{f}_a$ in the azimuth direction for all of the pixels, and a maximum $\widehat{f}_{r\max}$ and a minimum $\widehat{f}_{r\min}$ are determined from the estimated interferometric phase frequency $\widehat{f}_r$ in the range direction for all of the pixels. A frequency range of $[\widehat{f}_{a\min}, \widehat{f}_{a\max}] \times [\widehat{f}_{r\min}, \widehat{f}_{r\max}]$ in which the whole interferometric phase image is located is obtained.

Step C: a wavelet decomposition with a scale of s is performed on the real part and the imaginary part of the interferometric phase $e^{j\phi}$ in the complex field, respectively, to obtain frequency ranges of wavelet coefficients $c_{m,n}^i$ of different sub-bands, wherein $m$ and $n$ are positions of the wavelet coefficients, and $i$ is the scale of the decomposition within a range of $1$ to $s$.

There are many functions for wavelet decomposition in the art, such as Symlets function, Daubechies function, Coiflets function, all of which may be used in the present disclosure. In addition, the scale of s may have a range of 2 to 8, not limited to 5 as described in this embodiment.

The frequency ranges of the wavelet coefficients $c_{m,n}^i$ of different sub-bands may be:

$$a_s^{LL} \in [0, 2^{-s}\pi) \times [0, 2^{-s}\pi)$$

$$d_i^{LH} \in [0, 2^{-i}\pi) \times [2^{-i}\pi, 2^{1-i}\pi) \qquad i = 1, \cdots, s$$

$$d_i^{HL} \in [2^{-i}\pi, 2^{1-i}\pi) \times [0, 2^{-i}\pi) \qquad i = 1, \cdots, s$$

$$d_i^{HH} \in [2^{-i}\pi, 2^{1-i}\pi) \times [2^{-i}\pi, 2^{1-i}\pi) \quad i = 1, \cdots, s \qquad (3)$$

where $a_s^{LL}$ is the sub-band of a low-frequency part of an interferometric phase image, and $d_i^{LH}$, $d_i^{HL}$ and $d_i^{HH}$ are sub-bands of high-frequency parts of the interferometric phase image corresponding to a vertical direction, a horizontal direction, and a diagonal direction at respective scales.

Step D: for the real part and the imaginary part of the interferometric phase in the complex field, respectively, sub-bands in which useful information and noise are located are determined according to the frequency range in which the interferometric phase is located and the frequency ranges of the wavelet coefficients of the different sub-bands.

In particular, Step D comprises: whether there is an intersection between the frequency ranges $a_s^{LL}$, $d_1^{LH} \sim d_s^{LH}$, $d_1^{HL} \sim d_s^{HL}$, $d_1^{HH} \sim d_s^{HH}$ of the wavelet coefficients of different sub-bands and $[\hat{f}_{a\min}, \hat{f}_{a\max}] \times [\hat{f}_{r\min}, \hat{f}_{r\max}]$ is determined, respectively; and if there is an intersection, it is determined that the sub-band is a sub-band in which the useful information is located; if there is no intersection, it is determined that the sub-band is a sub-band in which the noise is located.

Step E: for the real part and the imaginary part of the interferometric phase in the complex field, respectively, general threshold shrinkage processing is performed on the wavelet coefficients of the sub-bands in which the noise is located.

In particular, the general threshold shrinkage processing is calculated as

$$\hat{c}_{m,n}^i = \text{sgn}(c_{m,n}^i)(|c_{m,n}^i| - T)_+ \qquad (4)$$

where $\hat{c}_{m,n}^i$ is a wavelet coefficient after the threshold shrinkage processing, sgn($\cdot$) is a sign function, and the subscript + indicates that a positive value is kept unchanged and a negative value is set to zero. T is a general threshold, and is obtained by:

$$T = \sigma\sqrt{2\log N} \qquad (5)$$

where N is the number of all pixels contained in the interferometric phase image, and $\sigma$ is a standard deviation of the noise and is estimated by:

$$\sigma = \frac{Median(|c_{m,n}^i|)}{0.6745} \qquad (6)$$

where *Median*() represents a median value.

The general threshold shrinkage has an advantage of good noise removal performance, and can remove the interferometric phase noise effectively.

Step F: for the real part and the imaginary part of the interferometric phase in the complex field, respectively, a neighborhood threshold shrinkage processing is performed on the wavelet coefficients of the sub-bands in which the useful information is located.

In particular, the neighborhood threshold shrinkage processing is calculated as follows:

firstly, a window W having an appropriate size is selected with the wavelet coefficient $c_{m,n}^i$ to be processed currently being the center. Let

$$S_{m,n}^{i}{}^2 = \sum_{(m,n) \in W} c_{m,n}^{i}{}^2 \qquad (7)$$

then the wavelet coefficient $\widehat{c}_{m,n}^{i}$ after the threshold shrinkage processing is [0059]

$$\widehat{c}_{m,n}^{i} = c_{m,n}^{i} \cdot (1 - \frac{T^{2}}{S_{m,n}^{i\,2}})_{+} \qquad (8)$$

where the subscript + indicates that a positive value is kept unchanged and a negative value is set to zero, and T is a general threshold and is calculated by: [0061]

$$T = \sigma \sqrt{2 \log N} \qquad (9)$$

where N is the number of pixels contained in the interferometric phase image, and $\sigma$ is a standard deviation of the noise and is estimated by:

$$\sigma = \frac{Median(|c_{m,n}^{i}|)}{0.6745} \qquad (10)$$

The neighborhood threshold has an advantage of strong detail retaining capability, which facilitates to protect the fringe structure in the interferometric phase image from being destroyed.

Step G: for the real part and the imaginary part of the interferometric phase in the complex field, respectively, wavelet reconstruction is performed, on the wavelet coefficients of the sub-bands in which the noise is located after the general threshold shrinkage processing obtained at Step E and the wavelet coefficients of the sub-bands in which the useful information is located after the neighborhood threshold shrinkage processing obtained at Step F collectively, to obtain a real part $\hat{Re}$ and an imaginary part $\hat{Im}$ of a filtered interferometric phase in the complex field;

A specific calculating process for the wavelet reconstruction is well-known by one skilled in the art, the description of which will be omitted for simplicity.

Step H: the filtered InSAR interferometric phase $\hat{\phi}$ is determined from the real part $\hat{Re}$ and the imaginary part $\hat{Im}$ of the filtered interferometric phase in the complex field:

$$\hat{\phi} = arctan(\hat{Im} / \hat{Re}) \qquad (11)$$

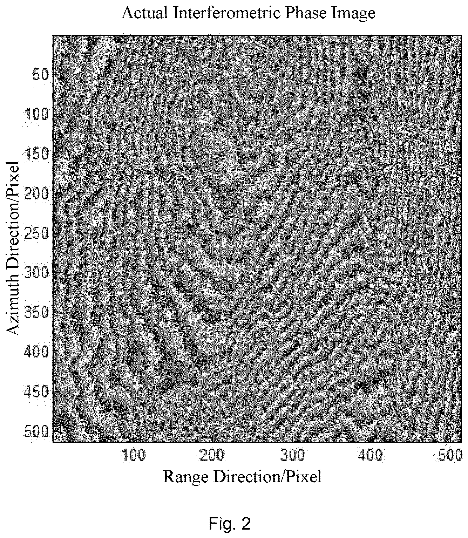

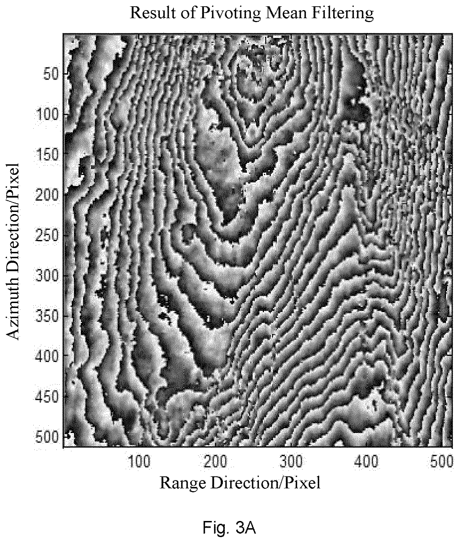

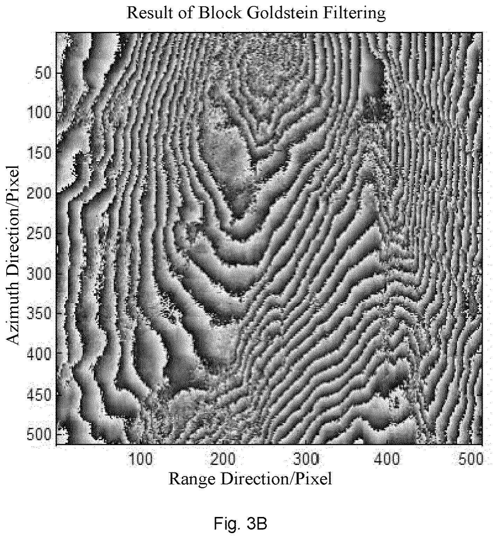

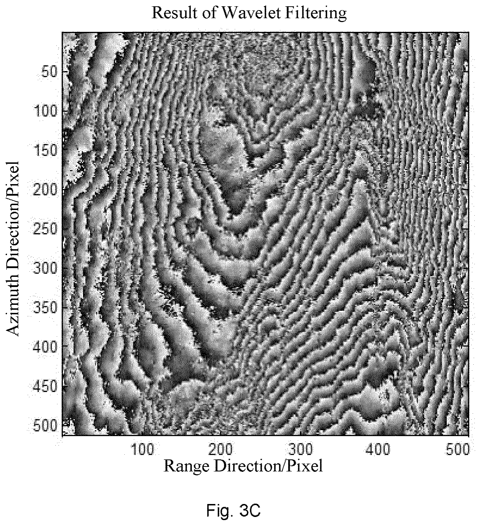

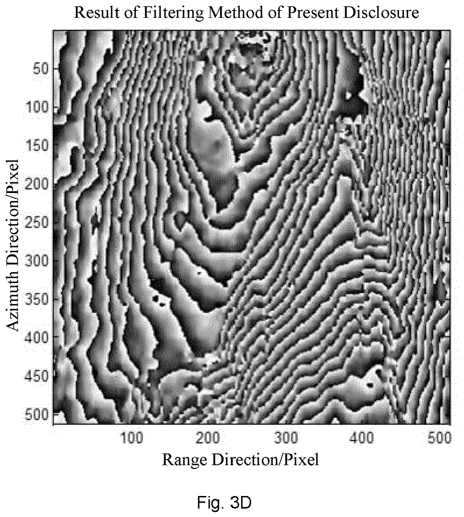

Hereinafter, effectiveness of the method for filtering InSAR interferometric phase in the wavelet domain according to the present embodiment is verified by measured data. Fig. 2 is a measured space-borne InSAR interferometric phase image of the Italian Etna volcano. Figs. 3A to 3D are interferometric phase images which are filtered by pivoting mean filtering, Goldstein filtering, wavelet filtering proposed by Lopez-Martinez C, and the method according to the present embodiment, respectively. Fig. 3A is a result of the pivoting mean filtering, and its filter window is 5 × 5; Fig. 3B is a result of the Goldstein filtering, and its block size is 32 × 32; Fig. 3C is a result of the wavelet filtering; and Fig. 3D is a result of the filtering method according to the present disclosure. It can be seen that the filtered interferometric phase based on the method of the present disclosure is smoothest, and the structure at the dense fringes is kept well. The number of residues in a filtered interferometric phase image may be used for evaluating the effect of noise removal, and the numbers of residues before and after filtering are calculated as shown in Table 1. It can be seen from Table 1 that the filtering method of the present disclosure has the least number of the residues remained after the filtering, and has the optimal noise removal effect.

Table 1. Comparison of Numbers of Residual Points Before and After Interferometric Phase Filtering

| | Before Filtering | Pivoting Mean Filtering | Goldstein Filtering | Wavelet Filtering | Filtering Method of Present Embodiment |
|---|---|---|---|---|---|
| Numbers of Residual Points | 43706 | 2678 | 9518 | 15241 | 1086 |

In addition, the order of the above steps is not limited to those listed above and may be changed or rearranged according to desired designs, unless indicated explicitly otherwise. For example, the order of Steps B and C in the above embodiment may be changed, and respective steps in Steps E and F may be performed sequentially or in parallel.

The embodiments of the present disclosure have been described in detail with reference to the drawings. Based on the above description, those skilled in the art should understand the method for InSAR interferometric phase filtering in the wavelet domain in conjunction with local frequency estimation according to the present disclosure well.

It should be noted that the above definitions of the various elements and methods are not limited to the various specific structures, shapes or approaches mentioned in the above embodiments, which may be simply changed or replaced by those skilled in the art. For example, the interferometric phase frequency estimation in sub-sub-step B2 may be replaced by a spectrum estimation method such as BF (Beam Forming) or MUSIC (Multi-signal Classification).

In summary, the present disclosure enables the distinction of the useful information sub-band from the noise sub-band in the wavelet coefficients of the complex interferometric phase by the local frequency estimation. The neighborhood threshold shrinkage is performed on the wavelet coefficients of the sub-bands in which the useful information is located, while the general threshold shrinkage is performed on the wavelet coefficients of other sub-bands. In this way, the noise may be removed as much as possible, while the detail information of the interferometric fringes may be kept from being destroyed, thereby achieving a highly accurate interferometric phase filtering and providing foundations for the highly accurate interferometric measurement.

## Claims

1. A method for Interferometric Synthetic Aperture Radar, InSAR, interferometric phase filtering in a wavelet domain in conjunction with local frequency estimation, the method comprising:

    Step A: transforming an InSAR interferometric phase $\phi$ into $e^{j\phi}$ in a complex field, and determining a real part and an imaginary part of the interferometric phase $e^{j\phi}$ in the complex field, respectively;

    Step B: performing the local frequency estimation on the interferometric phase $\phi$ to determine a frequency range in which the interferometric phase is located;

    Step C: performing wavelet decomposition with a scale of s on the real part and the imaginary part of the interferometric phase in the complex field, respectively, to determine frequency ranges of wavelet coefficients $c_{m,n}^{i}$ of different sub-bands, wherein $m$, $n$ are positions of the wavelet coefficients, and $i$ is the scale of the decomposition within a range of $1$ to $s$;

    Step D: determining, for the real part and the imaginary part of the interferometric phase in the complex field, respectively, sub-bands in which useful information and noise are located, respectively, according to the frequency range in which the interferometric phase is located and the frequency ranges of the wavelet coefficients of different sub-bands;

    Step E: performing, for the real part and the imaginary part of the interferometric phase in the complex field, respectively, a general threshold shrinkage processing on the wavelet coefficients of the sub-bands in which the noise is located, respectively;

    Step F: performing, for the real part and the imaginary part of the interferometric phase in the complex field, respectively, a neighborhood threshold shrinkage processing on the wavelet coefficients of the sub-bands in which the useful information is located, respectively;

    Step G: performing, for the real part and the imaginary part of the interferometric phase in the complex field, respectively, wavelet reconstruction on the wavelet coefficients of the sub-bands in which the noise is located after the general threshold shrinkage processing and the wavelet coefficients of the sub-bands in which the useful information is located after the neighborhood threshold shrinkage processing collectively, to determine a real part and an imaginary part of a filtered interferometric phase in the complex field; and

    Step H: determining the filtered InSAR interferometric phase from the real part and the imaginary part of the filtered interferometric phase in the complex field.

2. The method of InSAR interferometric phase filtering in a wavelet domain according to claim 1, wherein Step B comprises:

    Sub-step B1: performing the local frequency estimation for each pixel of the interferometric phase $\phi$ to determine an interferometric phase frequency $\widehat{f}_a$ in the azimuth direction and an interferometric phase frequency $\widehat{f}_r$ in the range direction; and

    Sub-step B2: determining a maximum $\widehat{f}_{a\max}$ and a minimum $\widehat{f}_{a\min}$ from the estimated interferometric phase

frequency $\widehat{f}_a$ in the azimuth direction for all of the pixels, and a maximum $\widehat{f}_{r\max}$ and a minimum $\widehat{f}_{r\min}$ from the estimated interferometric phase frequency $\widehat{f}_r$ in the range direction for all of the pixels, to determine a frequency range of $[\widehat{f}_{a\min},\widehat{f}_{a\max}]\times[\widehat{f}_{r\min},\widehat{f}_{r\max}]$ in which a whole interferometric phase image is located.

3. The method for InSAR interferometric phase filtering in a wavelet domain according to claim 2, wherein in Sub-step B1 of determining the interferometric phase frequency $\widehat{f}_a$ in the azimuth direction and the interferometric phase frequency $\widehat{f}_r$ in the range direction for each pixel of the interferometric phase $\phi$ comprises:

Sub-sub-step B1a: determining an estimation window having a size of (2M+1)$\times$ (2N+1) and centered at the pixel, a phase model of the estimation window being $\varphi(m + k,n + l) = 2\pi l{\cdot}f_r + 2\pi k \cdot f_a +\varphi(m,n)$,
where $\varphi(m,n)$ is the phase of the central pixel of the estimation window, *k and l* are offsets of a pixel in the window relative to the center of the window, and $f_a, f_r$ are the interferometric phase frequencies of the window in the azimuth direction and in the range direction, respectively;

Sub-sub-step B1b: estimating the interferometric phase frequency $\widehat{f}_a$ in the azimuth direction and the interferometric phase frequency $\widehat{f}_r$ in the range direction for the pixel by maximizing a cost function of the phase model of the estimation window:

$$\widehat{f}_r = \arg\max_{f_r}\{|\sum_{k=-M}^{M}\sum_{l=-N}^{N}\exp(j\varphi(m+k,n+l))\exp(-j2\pi f_r l)|\}$$

$$\widehat{f}_a = \arg\max_{f_a}\{|\sum_{k=-M}^{M}\sum_{l=-N}^{N}\exp(j\varphi(m+k,n+l))\exp(-j2\pi f_a k)|\}$$ .

4. The method for InSAR interferometric phase filtering in a wavelet domain according to claim 1, wherein in Step C, the frequency ranges of the wavelet coefficients $c_{m,n}^i$ of different sub-bands are:

$$a_s^{LL} \in [0,2^{-s}\pi)\times[0,2^{-s}\pi)$$

$$d_i^{LH} \in [0,2^{-i}\pi)\times[2^{-i}\pi,2^{1-i}\pi) \qquad i=1,\cdots,s$$

$$d_i^{HL} \in [2^{-i}\pi,2^{1-i}\pi)\times[0,2^{-i}\pi) \qquad i=1,\cdots,s$$

$$d_i^{HH} \in [2^{-i}\pi,2^{1-i}\pi)\times[2^{-i}\pi,2^{1-i}\pi) \quad i=1,\cdots,s ,$$

wherein $a_s^{LL}$ is the sub-band of a low-frequency part of an interferometric phase image, and $d_i^{LH}$, $d_i^{HL}$ and $d_i^{HH}$ are sub-bands of high-frequency parts of the corresponding interferometric phase image in a vertical direction, a horizontal direction and a diagonal direction at respective scales, respectively.

5. The method for InSAR interferometric phase filtering in a wavelet domain according to claim 1, wherein in Step C, a function for the wavelet decomposition is a Symlets function, a Daubechies function, or a Coiflets function, and wherein the scale of s is between 2 and 8.

6. The method for InSAR interferometric phase filtering in a wavelet domain according to claim 1, wherein Step D of determining the sub-bands in which the useful information and the noise are located, respectively, according to the frequency range in which the interferometric phase is located and the frequency ranges of the wavelet coefficients of different sub-bands comprises:

determining whether there is an intersection between the frequency ranges $a_s^{LL}$, $d_1^{LH} \sim d_s^{LH}$, $d_1^{HL} \sim d_s^{HL}$, $d_1^{HH} \sim d_s^{HH}$, and $[\widehat{f}_{a\min}, \widehat{f}_{a\max}] \times [\widehat{f}_{r\min}, \widehat{f}_{r\max}]$ of the wavelet coefficients of the different sub-bands, respectively; and

if there is an intersection, determining that the sub-band is a sub-band in which the useful information is located; if there is no intersection, determining that the sub-band is a sub-band in which the noise is located.

7. The method for InSAR interferometric phase filtering in a wavelet domain according to claim 1, wherein in Step E, the general threshold shrinkage processing on the wavelet coefficients of the sub-bands in which the noise is located is performed according to:

$$\widehat{c}_{m,n}^i = \mathrm{sgn}(c_{m,n}^i)(|c_{m,n}^i| - T)_+$$

wherein $\widehat{c}_{m,n}^i$ is a wavelet coefficient after the threshold shrinkage, $\mathrm{sgn}(\cdot)$ is a sign function, the subscript + indicates that a positive value is kept unchanged and a negative value is set to zero, and T is a general threshold.

8. The method for InSAR interferometric phase filtering in a wavelet domain according to claim 1, wherein Step F of performing the neighborhood threshold shrinkage processing on the wavelet coefficients of the sub-bands in which the useful information is located, respectively, comprises:

selecting a window $W$ having an appropriate size and centered at the wavelet coefficient $c_{m,n}^i$ to be currently processed, and determining

$$S_{m,n}^i{}^2 = \sum_{(m,n)\in W} c_{m,n}^i{}^2 ,$$

wherein the wavelet coefficient $\widehat{c}_{m,n}^i$ after the threshold shrinkage is $\widehat{c}_{m,n}^i = c_{m,n}^i \cdot (1 - \dfrac{T^2}{S_{m,n}^i{}^2})_+$ , and wherein the subscript + indicates that a positive value is kept unchanged and a negative value is set to zero, and T is a general threshold.

9. The method for InSAR interferometric phase filtering in a wavelet domain according to claim 7 or 8, wherein the general threshold T is calculated by:

$$T = \sigma\sqrt{2\log N}$$

wherein N is the number of pixels contained in the interferometric phase image, and $\sigma$ is the standard deviation of the noise and is estimated by $\sigma = \dfrac{Median(|c_{m,n}^i|)}{0.6745}$ .

10. The method for InSAR interferometric phase filtering in a wavelet domain according to any of claims 1 to 8, wherein in Step H, the filtered InSAR interferometric phase $\hat{\phi}$ is determined by:

$$\hat{\phi} = arctan(\hat{Im}/\hat{Re}),$$

wherein $\hat{Re}$ and $\hat{Im}$ are the real part and the imaginary part of the filtered interferometric phase in the complex field, respectively.

**Patentansprüche**

1. Verfahren zur interferometrischen InSAR(Interferometric Synthetic Aperture Radar)-Phasenfilterung in einer Wavelet-Domäne in Verbindung mit einer lokalen Frequenzschätzung, wobei das Verfahren umfasst:

Schritt A: Transformieren einer interferometrischen InSAR-Phase $\phi$ in $e^{j\phi}$ in einem komplexen Feld, bzw. Bestimmen eines realen Teils und eines imaginären Teils der interferometrischen Phase $e^{j\phi}$ in dem komplexen Feld;
Schritt B: Durchführen der lokalen Frequenzschätzung an der interferometrischen Phase $\phi$, um einen Frequenzbereich zu bestimmen, in dem sich die interferometrische Phase befindet;
Schritt C: Durchführen einer Wavelet-Zerlegung mit einer Skale von $s$ auf dem realen Teil bzw. dem imaginären Teil der interferometrischen Phase in dem komplexen Feld, um Frequenzbereiche von Wavelet-Koeffizienten $c_{m,n}^{i}$ von verschiedenen Teilbändern zu bestimmen, wobei $m$, $n$ Positionen der Wavelet-Koeffizienten sind und $i$ die Skala der Zerlegung innerhalb eines Bereichs von $1$ bis s ist;
Schritt D: Bestimmen, für den realen Teil bzw. den imaginären Teil der interferometrischen Phase in dem komplexen Feld, von Teilbändern, in denen sich Nutzinformationen und Rauschen befinden, gemäß dem Frequenzbereich, in dem sich die interferometrische Phase befindet, und den Frequenzbereichen der Wavelet-Koeffizienten von verschiedenen Teilbändern;
Schritt E: Durchführen, für den realen Teil bzw. den imaginären Teil der interferometrischen Phase in dem komplexen Feld, einer allgemeinen Threshold-Shrinkage-Verarbeitung an den Wavelet-Koeffizienten der Teilbänder, in denen sich jeweils das Rauschen befindet;
Schritt F: Durchführen, für den realen Teil bzw. den imaginären Teil der interferometrischen Phase in dem komplexen Feld, einer Nachbarschaft-Threshold-Shrinkage-Verarbeitung an den Wavelet-Koeffizienten der Teilbänder, in denen sich jeweils die Nutzinformationen befinden;
Schritt G: Durchführen, für den realen Teil bzw. den imaginären Teil der interferometrischen Phase in dem komplexen Feld, einer Wavelet-Rekonstruktion an den Wavelet-Koeffizienten der Teilbänder, in denen sich das Rauschen nach der allgemeinen Threshold-Shrinkage-Verarbeitung befindet, und der Wavelet-Koeffizienten der Teilbänder, in denen sich die Nutzinformationen nach der Nachbarschaft-Threshold-Shrinkage-Verarbeitung kollektiv befinden, um einen realen Teil und einen imaginären Teil einer gefilterten interferometrischen Phase in dem komplexen Feld zu bestimmen; und
Schritt H: Bestimmen der gefilterten interferometrischen InSAR-Phase aus dem realen Teil und dem imaginären Teil der gefilterten interferometrischen Phase in dem komplexen Feld.

2. Verfahren zur interferometrischen InSAR-Phasenfilterung in einer Wavelet-Domäne nach Anspruch 1, wobei Schritt B umfasst:

Teilschritt B1: Durchführen der lokalen Frequenzschätzung für jedes Pixel der interferometrischen Phase $\phi$, um eine interferometrische Phasenfrequenz $\hat{f}_a$ in der Azimutrichtung und eine interferometrische Phasenfrequenz $\hat{f}_r$ in der Reichweitenrichtung zu bestimmen; und
Teilschritt B2: Bestimmen eines Maximums $\hat{f}_{a\,max}$ und eines Minimums $\hat{f}_{a\,min}$ aus der geschätzten interferometrischen Phasenfrequenz $\hat{f}_a$ in der Azimutrichtung für alle der Pixel und eines Maximums $\hat{f}_{r\,max}$ und eines Minimums $\hat{f}_{r\,min}$ aus der geschätzten interferometrischen Phasenfrequenz $\hat{f}_r$ in der Reichweitenrichtung für alle der Pixel, um einen Frequenzbereich von $[\hat{f}_{a\,min}, \hat{f}_{a\,max}] \times [\hat{f}_{r\,min}, \hat{f}_{r\,max}]$ zu bestimmen, indem sich ein ganzes interferometrisches Phasenbild befindet.

3. Ein Verfahren zur interferometrischen InSAR-Phasenfilterung in einer Wavelet-Domäne nach Anspruch 2, wobei Teilschritt B1 des Bestimmens der interferometrischen Phasenfrequenz $\hat{f}_a$ in der Azimutrichtung und der interferometrischen Phasenfrequenz $\hat{f}_r$ in der Reichweitenrichtung für jedes Pixel der interferometrischen Phase $\phi$ umfasst:

Teilteilschritt B1a: Bestimmen eines Schätzfensters mit einer Größe von (2M+1)x(2N+1) und zentriert an dem Pixel, wobei ein Phasenmodell des Schätzfensters $\varphi(m + k,n + l) = 2\pi l \cdot f_r + 2\pi k \cdot f_a + \varphi(m, n)$ ist, wobei $\varphi(m,n)$ die Phase des zentralen Pixels des Schätzfensters ist, $k$ und $l$ Offsets eines Pixels in dem Fenster relativ zu der Mitte des Fensters sind und $f_a$, $f_r$ die interferometrischen Phasenfrequenzen des Fensters in der Azimutrichtung bzw. in der Reichweitenrichtung sind;
Teilteilschritt B1b: Schätzen der interferometrischen Phasenfrequenz $\hat{f}_a$ in der Azimutrichtung und der interferometrischen Phasenfrequenz $\hat{f}_r$ in der Reichweitenrichtung für das Pixel durch Maximieren einer Kostenfunktion des Phasenmodells des Schätzfensters:

$$\hat{f}_r = arg \max_{f_r}\left\{\left\|\sum_{k=-M}^{M}\sum_{l=-N}^{N}\exp\big(j\varphi(m+k,n+l)\big)\exp(-j2\pi f_r l)\right\|\right\}$$

$$\hat{f}_a = arg \max_{f_a}\left\{\left\|\sum_{k=-M}^{M}\sum_{l=-N}^{N}\exp\big(j\varphi(m+k,n+l)\big)\exp(-j2\pi f_a k)\right\|\right\}$$

4. Verfahren zur interferometrischen InSAR-Phasenfilterung in einer Wavelet-Domäne nach Anspruch 1, wobei in Schritt C die Frequenzbereiche der Wavelet-Koeffizienten $c_{m,n}^i$ von verschiedenen Teilbändern sind:

$$a_s^{LL} \in \left[0, 2^{-s}\pi\right) \times \left[0, 2^{-s}\pi\right)$$

$$d_i^{LH} \in \left[0, 2^{-i}\pi\right) \times \left[2^{-i}\pi, 2^{1-i}\pi\right) \quad i = 1, \ldots, s$$

$$d_i^{HL} \in \left[2^{-i}\pi, 2^{1-i}\pi\right) \times \left[0, 2^{-i}\pi\right) \quad i = 1, \ldots, s$$

$$d_i^{HH} \in \left[2^{-i}\pi, 2^{1-i}\pi\right) \times \left[2^{-i}\pi, 2^{1-i}\pi\right) \quad i = 1, \ldots, s,$$

wobei $a_s^{LL}$ das Teilband eines niederfrequenten Teils eines interferometrischen Phasenbilds ist und $d_i^{LH}$, $d_i^{HL}$ und $d_i^{HH}$ Teilbänder von hochfrequenten Teilen des entsprechenden interferometrischen Phasenbilds in einer vertikalen Richtung, einer horizontalen Richtung bzw. einer diagonalen Richtung bei jeweiligen Skalen sind.

5. Verfahren zur interferometrischen InSAR-Phasenfilterung in einer Wavelet-Domäne nach Anspruch 1, wobei in Schritt C eine Funktion für die Wavelet-Zerlegung eine Symlets-Funktion, eine Daubechies-Funktion oder eine Coiflets-Funktion ist und wobei die Skale von s zwischen 2 und 8 ist.

6. Verfahren zur interferometrischen InSAR-Phasenfilterung in einer Wavelet-Domäne nach Anspruch 1, wobei Schritt D des Bestimmens der Teilbänder, in denen sich die Nutzinformationen bzw. das Rauschen gemäß dem Frequenzbereich, in dem sich die interferometrische Phase befindet, und den Frequenzbereichen der Wavelet-Koeffizienten von verschiedenen Teilbändern befinden, umfasst:

Bestimmen, ob es eine Schnittmenge zwischen den Frequenzbereichen $a_s^{LL}$, $d_1^{LH} \sim d_s^{LH}$, $d_1^{HL} \sim d_s^{HL}$, $d_1^{HH} \sim d_s^{HH}$ und $[\hat{f}_{a\,min}, \hat{f}_{a\,max}] \times [\hat{f}_{r\,min}, \hat{f}_{r\,max}]$ der Wavelet-Koeffizienten der jeweils verschiedenen Teilbänder gibt; und
falls es eine Schnittmenge gibt, Bestimmen, dass das Teilband ein Teilband ist, in dem sich die Nutzinformationen befinden; falls es keine Schnittmenge gibt, Bestimmen, dass das Teilband ein Teilband ist, an dem sich das Rauschen befindet.

7. Verfahren zur interferometrischen InSAR-Phasenfilterung in einer Wavelet-Domäne nach Anspruch 1, wobei in Schritt E die allgemeine Threshold-Shrinkage-Verarbeitung an den Wavelet-Koeffizienten der Teilbänder, an denen sich das Rauschen befindet, durchgeführt wird gemäß:

$$\hat{c}_{m,n}^i = sgn(c_{m,n}^i)(|c_{m,n}^i| - T)_+$$

wobei $\hat{c}_{m,n}^i$ ein Wavelet-Koeffizient nach der Threshold-Shrinkage ist, *sgn*(·) eine Vorzeichenfunktion ist, das Subskript + anzeigt, dass ein positiver Wert unverändert gehalten wird und ein negativer Wert auf null gesetzt wird, und T ein allgemeiner Schwellwert ist.

8. Verfahren zur interferometrischen InSAR-Phasenfilterung in einer Wavelet-Domäne nach Anspruch 1, wobei Schritt F des Durchführens der Nachbarschaft-Threshold-Shrinkage-Verarbeitung an den Wavelet-Koeffizienten der Teilbänder, in denen sich jeweils die Nutzinformationen befinden, umfasst:

Wählen eines Fensters $W$ mit einer entsprechenden Größe und an dem Wavelet-Koeffizienten $c^i_{m,n}$ zentriert, der aktuell verarbeitet werden soll, und Bestimmen von

$$S^i_{m,n}{}^2 = \sum_{(m,n)\in W} c^i_{m,n}{}^2,$$

wobei der Wavelet-Koeffizient $\hat{c}^i_{m,n}$ nach der Threshold-Shrinkage $\hat{c}^i_{m,n} = c^i_{m,n} \cdot \left(1 - \frac{T^2}{S^i_{m,n}{}^2}\right)_+$ ist und wobei das Subskript + anzeigt, dass ein positiver Wert unverändert gehalten werden soll und ein negativer Wert auf null gesetzt wird und T ein allgemeiner Schwellwert ist.

9. Verfahren zur interferometrischen InSAR-Phasenfilterung in einer Wavelet-Domäne nach Anspruch 7 oder 8, wobei der allgemeiner Schwellwert T berechnet wird durch:

$$T = \sigma\sqrt{2logN},$$

wobei N die Anzahl von Pixeln ist, die in dem interferometrischen Phasenbild enthalten sind, und $\sigma$ die Standardabweichung des Rauschens ist und geschätzt wird durch

$$\sigma = \frac{médiane(|c^i_{m,n}|)}{0,6745}.$$

10. Verfahren zur interferometrischen InSAR-Phasenfilterung in einer Wavelet-Domäne nach einem der Ansprüche 1 bis 8, wobei in Schritt H die gefilterte interferometrische InSAR-Phase $\hat{\phi}$ bestimmt wird durch:

$$\hat{\phi} = arctan\left(\hat{Im}/\hat{Re}\right),$$

wobei $\hat{Re}$ und $\hat{Im}$ der reale Teil bzw. der imaginäre Teil der gefilterten interferometrischen Phase in dem komplexen Feld sind.

## Revendications

1. Procédé de filtrage de phase interférométrique de radar interférométrique à synthèse d'ouverture, InSAR, dans un domaine d'ondelettes conjointement avec une estimation de fréquence locale, le procédé comprenant :

étape A : transformation d'une phase interférométrique InSAR $\phi$ en $e^{j\phi}$ dans un champ complexe, et détermination d'une partie réelle et d'une partie imaginaire de la phase interférométrique $e^{j\phi}$ dans le champ complexe, respectivement ;
étape B : réalisation de l'estimation de fréquence locale sur la phase interférométrique $\phi$ pour déterminer une gamme de fréquences dans laquelle est située la phase interférométrique ;
étape C : réalisation d'une décomposition en ondelettes avec une échelle de $s$ sur la partie réelle et la partie imaginaire de la phase interférométrique dans le champ complexe, respectivement, pour déterminer des gammes de fréquences de coefficients d'ondelettes $c^i_{m,n}$ de différentes sous-bandes, où $m, n$ sont des positions des coefficients d'ondelettes, et $i$ est l'échelle de la décomposition à l'intérieur d'une gamme de 1 à $s$ ;
étape D : détermination, pour la partie réelle et la partie imaginaire de la phase interférométrique dans le champ complexe, respectivement, de sous-bandes dans lesquelles sont situés des informations utiles et du bruit, respectivement, en fonction de la gamme de fréquences dans laquelle est située la phase interférométrique et des gammes de fréquences des coefficients d'ondelettes de différentes sous-bandes ;

étape E : réalisation, pour la partie réelle et la partie imaginaire de la phase interférométrique dans le champ complexe, respectivement, d'un traitement de contraction de seuil général sur les coefficients d'ondelettes des sous-bandes dans lesquelles est situé le bruit, respectivement ;

étape F : réalisation, pour la partie réelle et la partie imaginaire de la phase interférométrique dans le champ complexe, respectivement, d'un traitement de contraction de seuil de voisinage sur les coefficients d'ondelettes des sous-bandes dans lesquelles sont situées les informations utiles, respectivement ;

étape G : réalisation, pour la partie réelle et la partie imaginaire de la phase interférométrique dans le champ complexe, respectivement, d'une reconstruction en ondelettes sur les coefficients d'ondelettes des sous-bandes dans lesquelles est situé le bruit après le traitement de contraction de seuil général et les coefficients d'ondelettes des sous-bandes dans lesquelles sont situées les informations utiles après le traitement de contraction de seuil de voisinage collectivement, pour déterminer une partie réelle et une partie imaginaire d'une phase interférométrique filtrée dans le champ complexe ; et

étape H : détermination de la phase interférométrique InSAR filtrée à partir de la partie réelle et de la partie imaginaire de la phase interférométrique filtrée dans le champ complexe.

2. Procédé de filtrage de phase interférométrique InSAR dans un domaine d'ondelettes selon la revendication 1, dans lequel l'étape B comprend :

sous-étape B1 : réalisation de l'estimation de fréquence locale pour chaque pixel de la phase interférométrique $\phi$ pour déterminer une fréquence de phase interférométrique $\hat{f}_a$ dans la direction de l'azimut et une fréquence de phase interférométrique $\hat{f}_r$ dans la direction de la portée ; et

sous-étape B2 : détermination d'un maximum $\hat{f}_{a\,max}$ et d'un minimum $\hat{f}_{a\,min}$ à partir de la fréquence de phase interférométrique estimée $\hat{f}_a$ dans la direction de l'azimut pour tous les pixels, et d'un maximum $\hat{f}_{r\,max}$ et d'un minimum $\hat{f}_{r\,min}$ à partir de la fréquence de phase interférométrique estimée $\hat{f}_r$ de la direction de la portée pour tous les pixels, pour déterminer une gamme de fréquences de $[\hat{f}_{a\,min}, \hat{f}_{a\,max}] \times [\hat{f}_{r\,min}, \hat{f}_{r\,max}]$ dans laquelle est située une image de phase interférométrique entière.

3. Procédé de filtrage de phase interférométrique InSAR dans un domaine d'ondelettes selon la revendication 2, dans lequel la sous-étape B1 de détermination de la fréquence de phase interférométrique $\hat{f}_a$ dans la direction de l'azimut et de la fréquence de phase interférométrique $\hat{f}_r$ dans la direction de la portée pour chaque pixel de la phase interférométrique $\phi$ comprend :

sous-sous-étape B1a : détermination d'une fenêtre d'estimation ayant une taille de (2M+1)x(2N+1) et centrée sur le pixel, un modèle de phase de la fenêtre d'estimation étant $\varphi(m + k, n + l) = 2\pi l \cdot f_r + 2\pi k \cdot f_a + \varphi(m, n)$, où $\varphi(m, n)$ est la phase du pixel central de la fenêtre d'estimation, $k$ et $l$ sont des décalages d'un pixel dans la fenêtre par rapport au centre de la fenêtre, et $f_a, f_r$ sont les fréquences de phase interférométrique de la fenêtre dans la direction de l'azimut et dans la direction de la portée, respectivement ;

sous-sous-étape B1b : estimation de la fréquence de phase interférométrique $\hat{f}_a$ dans la direction de l'azimut et de la fréquence de phase interférométrique $\hat{f}_r$ dans la direction de la portée pour le pixel par maximisation d'une fonction de coût du modèle de phase de la fenêtre d'estimation :

$$\hat{f}_r = arg\max\nolimits_{f_r}\left\{\left|\sum\nolimits_{k=-M}^{M}\sum\nolimits_{l=-N}^{N}\exp\big(j\varphi(m + k, n + l)\big)\exp(-j2\pi f_r l)\right|\right\}$$

$$\hat{f}_a = arg\max\nolimits_{f_a}\left\{\left|\sum\nolimits_{k=-M}^{M}\sum\nolimits_{l=-N}^{N}\exp\big(j\varphi(m + k, n + l)\big)\exp(-j2\pi f_a k)\right|\right\}.$$

4. Procédé de filtrage de phase interférométrique InSAR dans un domaine d'ondelettes selon la revendication 1, dans lequel, à l'étape C, les gammes de fréquences des coefficients d'ondelettes $c_{m,n}^{i}$ de différentes sous-bandes sont :

$$a_s^{LL} \in [0, 2^{-s}\pi) \times [0, 2^{-s}\pi)$$

$$d_i^{LH} \in \left[0, 2^{-i}\pi\right) \times \left[2^{-i}\pi, 2^{1-i}\pi\right) \quad i = 1, \dots, s$$

$$d_i^{HL} \in \left[2^{-i}\pi, 2^{1-i}\pi\right) \times \left[0, 2^{-i}\pi\right) \quad i = 1, \dots, s$$

$$d_i^{HH} \in \left[2^{-i}\pi, 2^{1-i}\pi\right) \times \left[2^{-i}\pi, 2^{1-i}\pi\right) \quad i = 1, \dots, s$$

où $a_s^{LL}$ est la sous-bande d'une partie basses fréquences d'une image de phase interférométrique, et $d_i^{LH}$, $d_i^{HL}$ et $d_i^{HH}$ sont des sous-bandes de parties hautes fréquences de l'image de phase interférométrique correspondante dans une direction verticale, une direction horizontale et une direction diagonale à des échelles respectives, respectivement.

5. Procédé de filtrage de phase interférométrique InSAR dans un domaine d'ondelettes selon la revendication 1, dans lequel, à l'étape C, une fonction pour la décomposition en ondelettes est une fonction Symlets, une fonction de Daubechies ou une fonction Coiflets, et dans lequel l'échelle de s se situe entre 2 et 8.

6. Procédé de filtrage de phase interférométrique InSAR dans un domaine d'ondelettes selon la revendication 1, dans lequel l'étape D de détermination des sous-bande dans lesquelles sont situés les informations utiles et le bruit, respectivement, en fonction de la gamme de fréquences dans laquelle est située la phase interférométrique et des gammes de fréquences des coefficients d'ondelettes de différentes sous-bandes comprend :

la détermination qu'il y a ou non une intersection entre les gammes de fréquences $a_s^{LL}$, $d_1^{LH} \sim d_s^{LH}$, $d_1^{HL} \sim d_s^{HL}$, $d_1^{HH} \sim d_s^{HH}$ et $[\hat{f}_{a\,min}, \hat{f}_{a\,max}] \times [\hat{f}_{r\,min}, \hat{f}_{r\,max}]$ des coefficients d'ondelettes des différentes sous-bandes, respectivement ; et
s'il y a une intersection, la détermination que la sous-bande est une sous-bande dans laquelle sont situées les informations utiles ; et s'il n'y a pas d'intersection, la détermination que la sous-bande est une sous-bande dans laquelle est situé le bruit.

7. Procédé de filtrage de phase interférométrique InSAR dans un domaine d'ondelettes selon la revendication 1, dans lequel, à l'étape E, le traitement de contraction de seuil général sur les coefficients d'ondelettes des sous-bandes dans lesquelles est situé le bruit est réalisé selon :

$$\hat{c}_{m,n}^i = sgn(c_{m,n}^i)(\left|c_{m,n}^i\right| - T)_+$$

où $\hat{c}_{m,n}^i$ est un coefficient d'ondelettes après la contraction de seuil, $sgn(\cdot)$ est une fonction signe, l'indice + indique qu'une valeur positive est maintenue inchangée et une valeur négative est réglée à zéro, et $T$ est un seuil général.

8. Procédé de filtrage de phase interférométrique InSAR dans un domaine d'ondelettes selon la revendication 1, dans lequel l'étape F de réalisation du traitement de contraction de seuil de voisinage sur les coefficients d'ondelettes des sous-bandes dans lesquelles sont situées les informations utiles, respectivement, comprend :

la sélection d'une fenêtre $W$ ayant une taille appropriée et centrée sur le coefficient d'ondelettes $c_{m,n}^i$ devant être actuellement traité, et la détermination de $S_{m,n}^i{}^2 = \sum_{(m,n) \in W} c_{m,n}^i{}^2$,

dans lequel le coefficient d'ondelettes $\hat{c}_{m,n}^i$ après la contraction de seuil est $\hat{c}_{m,n}^i = c_{m,n}^i \cdot (1 - \frac{T^2}{S_{m,n}^i{}^2})_+$,

et dans lequel l'indice + indique qu'une valeur positive est maintenue inchangée et une valeur négative est réglée à zéro, et T est un seuil général.

9. Procédé de filtrage de phase interférométrique InSAR dans un domaine d'ondelettes selon la revendication 7 ou 8, dans lequel le seuil général T est calculé par :

$$T = \sigma\sqrt{2logN}$$

où *N* est le nombre de pixels contenus dans l'image de phase interférométrique, et

$\sigma$ est l'écart type du bruit et est estimé par $\sigma = \dfrac{médiane(|c_{m,n}^i|)}{0,6745}$.

10. Procédé de filtrage de phase interférométrique InSAR dans un domaine d'ondelettes selon l'une quelconque des revendications 1 à 8, dans lequel, à l'étape H, la phase interférométrique InSAR filtrée $\hat{\phi}$ est déterminée par :

$$\hat{\phi} = \arctan(\hat{I}m/\hat{R}e)$$

où $\hat{R}e$ et $\hat{I}m$ sont la partie réelle et la partie imaginaire de la phase interférométrique filtrée dans le champ complexe, respectivement.

| Interferometric Phase Image $e^{j\phi_z}$ |
|---|

| $\mathrm{Re}\{e^{j\phi_z}\}$ | | $\mathrm{Im}\{e^{j\phi_z}\}$ | | Local Frequency Estimation |

Wavelet Decomposition

Wavelet Decomposition

| Signal Sub-band | Noise Sub-band | Signal Sub-band | Noise Sub-band |

| Neighborhood Threshold Shrinkage | General Threshold Shrinkage | Neighborhood Threshold Shrinkage | General Threshold Shrinkage |

Wavelet Reconstruction

Wavelet Reconstruction

| Filtered Real Part $\widehat{Re}$ | Filtered Imaginary Part $\widehat{Im}$ |

Filtered Interferometric Phase
$$\hat{\phi}_z = \arctan(\widehat{Im}\,/\,\widehat{Re})$$

Fig. 1

Actual Interferometric Phase Image

Fig. 2

Result of Pivoting Mean Filtering

Fig. 3A

Result of Block Goldstein Filtering

Fig. 3B

Result of Wavelet Filtering

Fig. 3C

Result of Filtering Method of Present Disclosure

Fig. 3D

**EP 3 229 038 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **R. LANARI.** Generation of digital elevation models by using SIR-C/X-SAR multifrequency two-pass interferometry: The Etna case study. *IEEE Transactions on Geoscience and Remote Sensing,* 1996, vol. 34 (5), 1097-1114
- **R. M. GOLDSTEIN ; C. L. WERNER.** Radar Interferogram filtering for Geophysical Application. *Geophysical Research Letters,* 1998, vol. 25 (21), 4035-4038
- **LOPEZ-MARTINEZ C ; FABREGAS X.** Modeling and reduction of SAR interferometric phase noise in the wavelet domain [J. *IEEE Trans. on Geoscience and Remote Sensing,* 2002, vol. 40 (12), 2553-2566
- Interferometic SAR Phase filtering in the wavelet Domain using Simultaneous Detection and Estimation. **Y. BIAN ; B. MERCER.** IEEE TRANSACTIONS ON GEOSCIENCE AND REMOTE SENSING. IEEE SERVICE CENTER, 01 April 2011, vol. 49, 1396-1416

- InSAR interferogram detail-compensating filtering method based on the stationary wavelet transform. **C. LIAND ; H. XIUFENG.** URBAN REMOTE SENSING EVENT. IEEE, 20 May 2009, 1-5
- **W. BEN ABDALLAH ; R. ABDELFATTAH.** A modification to the ASM filter for improving SAR interferograms. *21ST EUROPEAN SIGNAL PROCESSING CONFERENCE (EUSIPCO 2013), EURASIP,* 09 September 2013, 1-5
- SAR interferogram filtering in the wavelet domain using a coherence map mask. **R. ABDELFATTAH ; A BOUZID.** 15TH IEEE INTERNATIONAL CONFERENCE ON IMAGE PROCESSING: ICIP 2008. IEEE, 12 October 2008, 1888-1891